# EUROPEAN PATENT APPLICATION

(11) **EP 4 668 947 A1**
(43) Date of publication of application: **24.12.2025**
(21) Application number: 24756212.7
(22) Date of filing: 07.02.2024
(51) Int. Cl.: H04W 72/0446

(54) **METHOD AND APPARATUS USED IN NODE FOR WIRELESS COMMUNICATION**

(30) Priority: 15.02.2023 CN 202310122127
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/076572
(87) International publication number: WO 2024/169839

(57) **Abstract**

Disclosed in the present application are a method and apparatus used in a node for wireless communication. A first receiver receives a first PDCCH, and the first PDCCH ends at a first symbol. A first transmitter sends a first PUSCH and a second PUSCH, the first PDCCH schedules the first PUSCH, and the second PUSCH starts at a second symbol, wherein the first PUSCH and the second PUSCH overlap in a time domain. Whether the end of the first symbol can be less than N symbols earlier than the start of the second symbol is related to whether the first PDCCH and the second PUSCH are associated to different coresetPoolIndex values, wherein N depends on a UE processing capability.

## Description

### Technical Field

The present application relates to a transmission method and apparatus in a wireless communication system, in particular to a transmission method and apparatus for wireless signals in a wireless communication system supporting a cellular network.

### Background Art

For an uplink, enhancing scenarios where multiple PUSCHs overlapping in a time domain are sent is an effective means to improve transmission efficiency.

### Summary of the Invention

In a scenario where multiple PUSCHs overlapping in a time domain are sent, how to improve scheduling flexibility is an important issue that needs to be considered. The present application discloses a solution for the above issue. The present application may be applicable to a variety of wireless communication scenarios, such as single-TRP (Transmit/Receive Point) transmission, multi-TRP transmission, single-panel transmission, multi-panel transmission, etc., and achieves similar technical effects. In addition, the use of a unified solution for different scenarios (including but not limited to single-TRP transmission, multi-TRP transmission, single-panel transmission, and multi-panel transmission) also facilitates reducing hardware complexity and costs, or improving performance. In the absence of conflicts, embodiments and features in the embodiments in any node of the present application can be applied to any other node. In the absence of conflicts, embodiments and features in the embodiments of the present application can be arbitrarily combined with each other.

As one embodiment, the interpretation of the terminology in the present application refers to the definition of the 3GPP standard protocol TS36 series.

As one embodiment, the interpretation of the terminology in the present application refers to the definition of the 3GPP standard protocol TS38 series.

As one embodiment, the interpretation of the terminology in the present application refers to the definition of the 3GPP standard protocol TS37 series.

As one embodiment, the interpretation of the terminology in the present application refers to the definition of the IEEE (Institute of Electrical and Electronics Engineers) standard protocol.

The present application discloses a method used in a first node for wireless communication, comprising:
receiving a first PDCCH, the first PDCCH ending at a first symbol;
and sending a first PUSCH and a second PUSCH, the first PDCCH scheduling the first PUSCH, and the second PUSCH starting at a second symbol,
wherein the first PUSCH and the second PUSCH overlap in a time domain; and whether an end of the first symbol can be less than N symbols earlier than a start of the second symbol is related to whether the first PDCCH and the second PUSCH are associated to different coresetPoolIndex values, and N depends on a UE processing capability.

As one embodiment, the benefits of the above method comprise: improving scheduling flexibility.

As one embodiment, the benefits of the above method comprise: improving uplink transmission performance.

As one embodiment, the benefits of the above method comprise: being conducive to reducing transmission latency.

As one embodiment, the benefits of the above method comprise: optimizing the system design to support different user equipment.

As one embodiment, the benefits of the above method comprise: good compatibility.

As one embodiment, the benefits of the above method comprise: small changes to existing 3GPP standards and small workloads required for standardization.

According to one aspect of the present application, the above method is characterized in that,
when the first PDCCH and the second PUSCH are associated to different coresetPoolIndex values, the end of the first symbol can be less than N symbols earlier than the start of the second symbol.

As one embodiment, the benefits of the above method comprise: improving scheduling flexibility.

As one embodiment, the benefits of the above method comprise: being conducive to supporting different user equipment, and having good compatibility.

As one embodiment, the benefits of the above method comprise: being conducive to reducing transmission latency.

According to one aspect of the present application, the above method is characterized in that,
when the first PDCCH and the second PUSCH are not associated to different coresetPoolIndex values, the end of the first symbol cannot be less than N symbols earlier than the start of the second symbol.

As one embodiment, the benefits of the above method comprise: being conducive to supporting different user equipment, and having good compatibility.

According to one aspect of the present application, the above method is characterized in that,
the second PUSCH is a PUSCH with a configured grant.

As one embodiment, the benefits of the above method comprise: being conducive to supporting that a PUSCH dynamically scheduled by DCI and a PUSCH with the configured grant on one serving cell are simultaneously sent on one serving cell, and improving scheduling flexibility or transmission efficiency.

According to one aspect of the present application, the above method is characterized in that,
the first PUSCH and the second PUSCH are on the same serving cell.

As one embodiment, the benefits of the above method comprise: being conducive to supporting that multiple PUSCHs are simultaneously sent on one serving cell, and improving scheduling flexibility or transmission efficiency.

According to one aspect of the present application, the above method is characterized in that,
the N is the number of symbols occupied by PUSCH preparation time.

According to one aspect of the present application, the above method is characterized in that,
the coresetPoolIndex value to which the first PDCCH is associated is a coresetPoolIndex value to which the first PUSCH is associated.

According to one aspect of the present application, the above method is characterized in that,
ackNackFeedbackMode is configured as separate.

As one embodiment, the benefits of the above method comprise: improving scheduling flexibility.

The present application discloses a method used in a second node for wireless communication, comprising:
sending a first PDCCH, the first PDCCH ending at a first symbol;
and receiving the first PUSCH and the second PUSCH, the first PDCCH scheduling the first PUSCH, and the second PUSCH starting at a second symbol,
wherein the first PUSCH and the second PUSCH overlap in a time domain; and whether an end of the first symbol can be less than N symbols earlier than a start of the second symbol is related to whether the first PDCCH and the second PUSCH are associated to different coresetPoolIndex values, and N depends on a UE processing capability.

According to one aspect of the present application, the above method is characterized in that,
when the first PDCCH and the second PUSCH are associated to different coresetPoolIndex values, the end of the first symbol can be less than N symbols earlier than the start of the second symbol.

According to one aspect of the present application, the above method is characterized in that,
when the first PDCCH and the second PUSCH are not associated to different coresetPoollndex values, the end of the first symbol cannot be less than N symbols earlier than the start of the second symbol.

According to one aspect of the present application, the above method is characterized in that,
the second PUSCH is a PUSCH with a configured grant.

According to one aspect of the present application, the above method is characterized in that,

The first PUSCH and the second PUSCH are on the same serving cell.

According to one aspect of the present application, the above method is characterized in that,
the N is the number of symbols occupied by PUSCH preparation time.

According to one aspect of the present application, the above method is characterized in that,
the coresetPoolIndex value to which the first PDCCH is associated is a coresetPoolIndex value to which the first PUSCH is associated.

According to one aspect of the present application, the above method is characterized in that,
ackNackFeedbackMode is configured as separate.

The present application discloses a first node used for wireless communication, comprising:
a first receiver receiving a first PDCCH, the first PDCCH ending at a first symbol;
and a first transmitter sending a first PUSCH and a second PUSCH, the first PDCCH scheduling the first PUSCH, and the second PUSCH starting at a second symbol,
wherein the first PUSCH and the second PUSCH overlap in a time domain; and whether an end of the first symbol can be less than N symbols earlier than a start the second symbol is related to whether the first PDCCH and the second PUSCH are associated to different coresetPoolIndex values, and N depends on a UE processing capability.

The present application discloses a second node used for wireless communication, comprising:
a second transmitter sending a first PDCCH, the first PDCCH ending at a first symbol;
and a second receiver receiving a first PUSCH and a second PUSCH, the first PDCCH scheduling the first PUSCH, and the second PUSCH starting at a second symbol,
wherein the first PUSCH and the second PUSCH overlap in a time domain; and whether an end of the first symbol can be less than N symbols earlier than a start of the second symbol is related to whether the first PDCCH and the second PUSCH are associated to different coresetPoollndex values, and N depends on a UE processing capability.

### Brief Description of the Drawings

By reading the detailed description of the non-limiting embodiments in the following drawings, other features, purposes and advantages of the present application will become more obvious:
FIG. 1 shows a processing flowchart of a first node according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first communication device and a second communication device according to one embodiment of the present application;
FIG. 5 shows a flowchart of signal transmission according to one embodiment of the present application;
FIG. 6 shows a schematic diagram illustrating that an end of a first symbol can be less than N symbols earlier than a start of a second symbol according to one embodiment of the present application;
FIG. 7 shows a schematic diagram illustrating that an end of a first symbol cannot be less than N symbols earlier than a start of a second symbol according to one embodiment of the present application;
FIG. 8 shows a structural block diagram of a processing apparatus in a first node device according to one embodiment of the present application; and
FIG. 9 shows a structural block diagram of a processing apparatus in a second node device according to one embodiment of the present application.

### Detailed Description of Embodiments

The technical solutions of the present application will be further described in detail below in conjunction with the accompanying drawings. In the absence of conflicts, the embodiments and features in the embodiments of the present application can be arbitrarily combined with each other.

### Embodiment 1

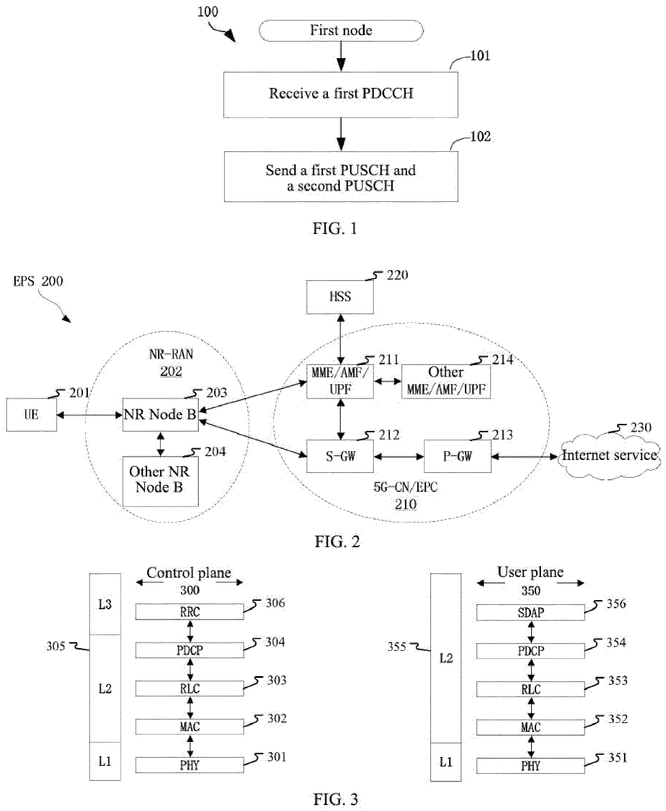

Embodiment 1 illustrates a processing flowchart of a first node according to one embodiment of the present application, as shown in FIG. 1.

In Embodiment 1, the first node in the present application receives a first PDCCH in step 101; and sends a first PUSCH and a second PUSCH in step 102.

In Embodiment 1, the first PDCCH ends at a first symbol; the first PDCCH schedules the first PUSCH, and the second PUSCH starts at a second symbol; the first PUSCH and the second PUSCH overlap in a time domain; and whether the end of the first symbol can be less than N symbols earlier than the start of the second symbol is related to whether the first PDCCH and the second PUSCH are associated to different coresetPoolIndex values, and the N depends on a UE processing capability.

As one embodiment, the meaning of receiving one PDCCH (Physical downlink control channel) includes: performing monitoring in this PDCCH.

As one embodiment, the meaning of receiving one PDCCH includes: detecting a DCI format in this PDCCH.

As one embodiment, the meaning of receiving one PDCCH includes: receiving one piece of DCI (Downlink control information) in this PDCCH.

As one embodiment, the meaning of receiving one PDCCH is: receiving one piece of DCI in this PDCCH.

As one embodiment, the meaning of receiving one PDCCH is: receiving one DCI format in this PDCCH.

As one embodiment, the meaning of sending one PUSCH (Physical uplink shared channel) is: sending at least one of a transport block or CSI (Channel state information) report on this PUSCH.

As one embodiment, the meaning of sending one PUSCH (Physical uplink shared channel) is: sending a signal on this PUSCH.

As one embodiment, the meaning of sending one PUSCH is: sending at least one of a transport block or CSI report on this PUSCH.

As one embodiment, the meaning of sending one PUSCH includes: sending a signal on this PUSCH, the sent signal including one bit block subjected to at least channel coding, scrambling, modulation, layer mapping, pre-encoding, mapping to virtual resource blocks, and output after mapping from virtual resource blocks to physical resource blocks.

As one embodiment, the meaning of sending one PUSCH includes: sending uplink information, this PUSCH being used for carrying the uplink information.

As one embodiment, the meaning of "one PDCCH schedules one PUSCH" is: this PDCCH schedules the sending of this PUSCH.

As one embodiment, the meaning of "one PDCCH schedules one PUSCH" is: DCI received in this PDCCH schedules this PUSCH.

As one embodiment, the meaning of "one PDCCH schedules one PUSCH" is: a DCI format received in this PDCCH schedules this PUSCH.

As one embodiment, the meaning of "one PDCCH schedules one PUSCH" is: DCI received in this PDCCH schedules this PUSCH.

As one embodiment, the meaning of "one PDCCH schedules one PUSCH" includes: this PDCCH carries scheduling information of this PUSCH.

As one embodiment, the meaning of "one PDCCH schedules one PUSCH" includes: the sending of this PUSCH depends on the reception of this PDCCH.

As one embodiment, the second PUSCH is a PUSCH with a configured grant.

As one embodiment, the configured grant that the second PUSCH has is a Type 2 configured grant.

As one embodiment, the second PUSCH is a PUSCH with a configured grant activated by a DCI format.

As one embodiment, the first PUSCH and the second PUSCH are on the same serving cell.

As one embodiment, the first PDCCH ends at a first symbol in a time domain.

As one embodiment, the first symbol is the latest symbol occupied by the first PDCCH in a time domain.

As one embodiment, the first symbol is a symbol i.

As one embodiment, the first symbol is an OFDM (orthogonal frequency division multiplex) symbol.

As one embodiment, the first symbol is a symbol in a slot.

As one embodiment, the second PUSCH starts at a second symbol in a time domain.

As one embodiment, the second symbol is the earliest symbol occupied by the second PUSCH in a time domain.

As one embodiment, the second symbol is a symbol j.

As one embodiment, the second symbol is an OFDM (Orthogonal frequency division multiplex) symbol.

As one embodiment, the second symbol is a symbol in a slot.

As one embodiment, the first symbol is a symbol for a serving cell where the first PDCCH is located.

As one embodiment, the second symbol is a symbol for a serving cell where the first PUSCH is located.

As one embodiment, the first symbol and the second symbol are symbols for the same serving cell.

As one embodiment, the first symbol and the second symbol are respectively symbols for different serving cells.

As one embodiment, the meaning of the expression "the first PUSCH and the second PUSCH overlap in a time domain" is: transmission occasions occupied by the first PUSCH and the second PUSCH overlap in the time domain.

As one embodiment, a time domain resource occupied by the first PUSCH and a time domain resource occupied by the second PUSCH at least overlap partially.

As one embodiment, the expressions "whether the end of the first symbol can be less than N symbols earlier than the start of the second symbol is related to whether the first PDCCH and the second PUSCH are associated to different coresetPoolIndex values" and "whether the end of the first symbol is less than N symbols earlier than the start of the second symbol is related to whether the first PDCCH and the second PUSCH are associated to different coresetPoolIndex values" are equivalent or interchangeable.

As one embodiment, the expressions "whether the first PDCCH and the second PUSCH are associated to different coresetPoolIndex values" and "whether the first PUSCH and the second PUSCH are associated to different coresetPoolIndex values" are equivalent or interchangeable.

As one embodiment, the meaning of the expression "whether the end of the first symbol can be less than N symbols earlier than the start of the second symbol is related to whether the first PDCCH and the second PUSCH are associated to different coresetPoolIndex values" is: whether the end of the first symbol being less than N symbols earlier than the start of the second symbol is not expected is related to whether the first PDCCH and the second PUSCH are associated to different coresetPoolIndex values.

As one embodiment, the meaning of the expression "whether the end of the first symbol can be less than N symbols earlier than the start of the second symbol is related to whether the first PDCCH and the second PUSCH are associated to different coresetPoolIndex values" is: whether the end of the first symbol being less than N symbols earlier than the start of the second symbol is allowed or is not expected is related to whether the first PDCCH and the second PUSCH are associated to different coresetPoolIndex values.

As one embodiment, the meaning of the expression "whether the end of the first symbol can be less than N symbols earlier than the start of the second symbol is related to whether the first PDCCH and the second PUSCH are associated to different coresetPoolIndex values" is:
a time domain relationship between the first symbol and the second symbol is related to whether the first PDCCH and the second PUSCH are associated to different coresetPoolIndex values; when the first PDCCH and the second PUSCH are associated to different coresetPoolIndex values, the end of the first symbol can be less than N symbols earlier than the start of the second symbol; and when the first PDCCH and the second PUSCH are not associated to different coresetPoolIndex values, the end of the first symbol cannot be less than N symbols earlier than the start of the second symbol.

As one embodiment, when the first PDCCH and the second PUSCH are not associated to different coresetPoollndex values, the end of the first symbol can be less than N symbols earlier than the start of the second symbol; and when the first PDCCH and the second PUSCH are associated to different coresetPoolIndex values, the end of the first symbol cannot be less than N symbols earlier than the start of the second symbol.

As one embodiment, the N is determined based on a UE processing capability.

As one embodiment, the N is based on the smaller one of a subcarrier interval corresponding to the second PUSCH and a subcarrier interval corresponding to the first PDCCH.

As one embodiment, the N is the number of symbols occupied by PUSCH preparation time.

As one embodiment, the N is greater than 0.

As one embodiment, the N is not less than 5.

As one embodiment, the N is one of 5, 5.5, and 11.

As one embodiment, the N is one of 10, 12, 23, 36, 144, and 288.

As one embodiment, when the first PDCCH and the second PUSCH are associated to different coresetPoolIndex values, the end of the first symbol can be less than N symbols earlier than the start of the second symbol; and the second PUSCH is a PUSCH with a configured grant, and the first PUSCH and the second PUSCH are on the same serving cell.

As one sub-embodiment of the above embodiment, the N is the number of symbols occupied by PUSCH preparation time.

As one embodiment, when the first PDCCH and the second PUSCH are not associated to different coresetPoolIndex values, the end of the first symbol cannot be less than N symbols earlier than the start of the second symbol; and the second PUSCH is a PUSCH with a configured grant, and the first PUSCH and the second PUSCH are on the same serving cell.

As one sub-embodiment of the above embodiment, the N is the number of symbols occupied by PUSCH preparation time.

As one embodiment, when the first PDCCH and the second PUSCH are associated to different coresetPoolIndex values, the end of the first symbol can be less than N symbols earlier than the start of the second symbol; when the first PDCCH and the second PUSCH are not associated to different coresetPoolIndex values, the end of the first symbol cannot be less than N symbols earlier than the start of the second symbol; and the second PUSCH is a PUSCH with a configured grant, and the first PUSCH and the second PUSCH are on the same serving cell.

As one sub-embodiment of the above embodiment, the N is the number of symbols occupied by PUSCH preparation time.

As one embodiment, ackNackFeedbackMode is configured as separate.

As one embodiment, ackNackFeedbackMode is configured as joint.

As one embodiment, ackNackFeedbackMode is not configured.

As one embodiment, the ackNackFeedbackMode is a higher layer parameter.

As one embodiment, the ackNackFeedbackMode is an RRC layer parameter.

As one embodiment, the first node receives a first parameter; based on a configuration of the first parameter, it is allowed that 2 PUSCHs are simultaneously sent on the same serving cell.

As one embodiment, the first node receives a first parameter; and based on a configuration of the first parameter, it is allowed that 2 PUSCHs that occupy at least one identical RE (Resource element) on the same serving cell are both sent.

As one embodiment, the first parameter is a parameter for the same serving cell.

As one embodiment, the first parameter is an RRC layer parameter.

As one embodiment, the first parameter is one parameter in one information element (IE).

As one embodiment, a name of the first parameter includes STxMP.

As one embodiment, a name of the first parameter includes multi-DCI.

As one embodiment, the first node is configured with a higher layer parameter PDCCH-Config of an active BWP (Bandwidth part) for one serving cell, and the higher layer parameter PDCCH-Config includes 2 different coresetPoolIndex values in ControlResourceSet.

As one embodiment, the first node is configured or not configured with a higher layer parameter PDCCH-Config of an active BWP for one serving cell, and the higher layer parameter PDCCH-Config includes 2 different coresetPoolIndex values in ControlResourceSet.

As one embodiment, the first node is not configured with prioritizationBetweenLP-DG-PUSCHandHP-CG-PUSCH or prioritizationBetweenHP-DG-PUSCHandLP-CG-PUSCH.

As one embodiment, the first node is configured with prioritizationBetweenLP-DG-PUSCHandHP-CG-PUSCH or prioritizationBetweenHP-DG-PUSCHandLP-CG-PUSCH, and the first PUSCH and the second PUSCH have the same priority index.

### Embodiment 2

Embodiment 2 illustrates a schematic diagram of one network architecture according to the present application, as shown in FIG. 2.

FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in the figure, the EPS provides packet switching services, but those skilled in the art will readily appreciate that the various concepts presented throughout the present application may be extended to networks providing circuit switching services or other cellular networks. The NG-RAN comprises an NR Node B (gNB) 203 and other gNB204. The gNB203 provides user and control plane protocol termination toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmit/receive point), or some other suitable terminologies. The gNB203 provides an access point to the EPC/5G-CN 210 for the UE201. Examples of the UE201 comprise cellular phones, smart phones, Session Initiation Protocol (SIP) phones, laptops, personal digital assistants (PDAs), satellite radio, non-terrestrial base station communication, satellite mobile communication, global positioning systems, multimedia apparatuses, video apparatuses, digital audio players (e.g., MP3 players), cameras, game consoles, drones, aircrafts, narrowband Internet of Things devices, machine type communication devices, land vehicles, automobiles, wearable devices, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted by the S-GW212, and the S-GW212 itself is connected to the P-GW213. The P-GW213 provides UE IP address allocation and other functions. The P-GW213 is connected to the Internet service 230. The Internet service 230 comprises operator-corresponding Internet protocol services, which may specifically comprise Internet, intranet, IMS (IP Multimedia Subsystem) and packet switching streaming services.

As one embodiment, the UE201 corresponds to the first node in the present application.

As one embodiment, the UE201 corresponds to the second node in the present application.

As one embodiment, the UE201 is UE.

As one embodiment, the gNB203 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device supporting a large-latency difference.

As one embodiment, the gNB203 is one flying platform device.

As one embodiment, the gNB203 is a satellite device.

### Embodiment 3

Embodiment 3 shows a schematic diagram of an embodiment of a radio protocol architecture for one user plane and one control plane according to the present application, as shown in FIG. 3. FIG. 3 is a schematic diagram illustrating an embodiment of a radio protocol architecture for a user plane 350 and a control plane 300, and FIG. 3 shows a radio protocol architecture of the control plane 300 used between a first communication node device (UE, gNB, or RSU in V2X) and a second communication node device (gNB, UE, or RSU in V2X) or between two pieces of UE using three layers: Layer 1, Layer 2 and Layer 3. The Layer 1 (L1 layer) is the lowest layer and implements various PHY (physical layer) signal processing functions. The L1 layer will be referred to as PHY301 herein. The Layer 2 (L2 layer) 305 is above PHY301, and is responsible for links between the first communication node device and the second communication node device as well as between two pieces of UE by the PHY301. The L2 layer 305 includes an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides support for cross-zone mobility of the first communication node device between the second communication node devices. The RLC sublayer 303 provides segmentation and reassembly of upper layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. The RRC (Radio Resource Control) sublayer 306 in the Layer 3 (L3 layer) in the control plane 300 is responsible for obtaining radio resources (i.e., radio bearers) and configuring lower layers using RRC signaling between the second communication node device and the first communication node device. A radio protocol architecture for the user plane 350 includes the Layer 1 (L1 layer) and the Layer 2 (L2 layer). A radio protocol architecture for the first communication node device and the second communication node device in the user plane 350 is substantially the same as corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 further includes an SDAP (Service Data Adaptation Protocol) sublayer 356, and the SDAP sublayer 356 is responsible for mapping between QoS streams and data radio bearers (DRBs) to support the diversity of services. Although not shown in the figure, the first communication node device may have several upper layers above the L2 layer 355, including a network layer (e.g., an IP layer) terminating at a P-GW on a network side and an application layer terminating at another end (e.g., remote UE, a server, etc.) of connection.

As one embodiment, a radio protocol architecture in FIG. 3 is applicable to the first node in the present application.

As one embodiment, the radio protocol architecture in FIG. 3 is applicable to the second node in the present application.

As one embodiment, the first PDCCH in the present application is generated in the PHY301.

As one embodiment, the first PUSCH in the present application is generated in the PHY351.

As one embodiment, the second PUSCH in the present application is generated in the PHY351.

### Embodiment 4

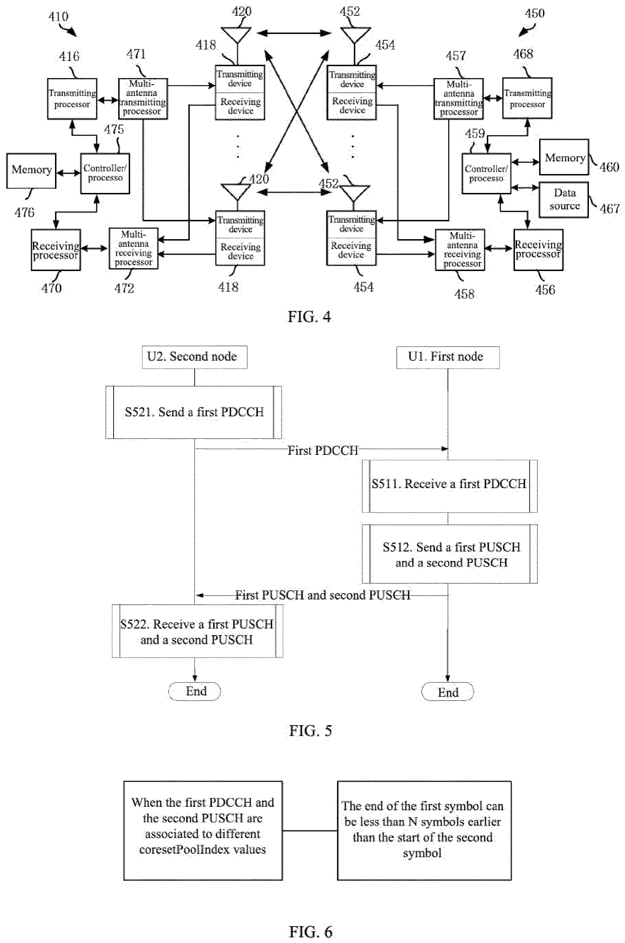

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from a core network are provided to the controller/processor 475. The controller/processor 475 implements the functionality of the L2 layer. In the transmission from the first communication device 410 to the second communication device 450, the controller/processor 475 provides header compression, encryption, packet segmentation and reordering, multiplexing between logical channels and transport channels, and radio resource allocation to the second communication device 450 based on various priority metrics. The controller/processor 475 is also responsible for retransmission of lost packets and signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, including codebook-based precoding and non-codebook-based precoding, and beamforming processing on the coded and modulated symbols to generate one or more parallel streams. The transmitting processor 416 then maps each spatial stream to a subcarrier, multiplexes with a reference signal (for example, a pilot) in a time domain and/or a frequency domain, and subsequently uses an inverse fast Fourier transform (IFFT) to generate a physical channel carrying a time-domain multi-carrier symbol stream. The multi-antenna transmitting processor 471 then performs sending analog precoding/beamforming operations on the time domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, and converts a radio frequency stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream subjected to the receiving analog precoding/beamforming operation from a time domain to a frequency domain. In the frequency domain, a physical layer data signal and a reference signal are demultiplexed by the receiving processor 456, wherein the reference signal will be used for channel estimation, and the data signal is subjected to multi-antenna detection in the multi-antenna receiving processor 458 to recover any space stream destined for the second communication device 450. Symbols on each spatial stream are demodulated and recovered in the receiving processor 456, and soft decisions are generated. Then, the receiving processor 456 decodes and deinterleaves the soft decisions to recover the upper layer data and control signals transmitted by the first communication device 410 on a physical channel. The upper layer data and control signals are then provided to the controller/processor 459. The controller/processor 459 implements the functions of the L2 layer. The controller/processor 459 may be associated to a memory 460 storing program codes and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover the upper layer data packets from the core network. The upper layer data packets are then provided to all protocol layers above the L2 layer. Various control signals may also be provided to L3 for L3 processing.

In the transmission from the second communication device 450 to the first communication device 410, at the second communication device 450, the data source 467 is used to provide upper layer data packets to the controller/processor 459. The data source 467 represents all protocol layers above the L2 layer. Similar to the transmission function described at the first communication device 410 in the transmission from the first communication device 410 to the second communication device 450, the controller/processor 459 implements header compression, encryption, packet segmentation and reordering, and multiplexing between logical and transport channels based on radio resource allocation, and implements L2 layer functions for the user plane and the control plane. The controller/processor 459 is also responsible for retransmission of lost packets, and for signaling to the first communication device 410. The transmitting processor 468 performs modulation mapping and channel encoding processing, the multi-antenna transmitting processor 457 performs digital multi-antenna spatial precoding (comprising codebook-based precoding and non-codebook-based precoding) and beamforming processing, and subsequently the transmitting processor 468 modulates the generated spatial stream into a multi-carrier/single-carrier symbol stream, which is subjected to analog precoding/beamforming operations in the multi-antenna transmitting processor 457 and is then provided to different antennas 452 by the transmitting device 454. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the reception function described at the second communication device 450 in the transmission from the first communication device 410 to the second communication device 450. Each receiving device 418 receives a radio frequency signal through its corresponding antenna 420, converts the received radio frequency signal into a baseband signal, and provides the band signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated to a memory 476 storing program codes and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover upper layer data packets from the UE450. The upper layer data packets from the controller/processor 475 may be provided to the core network.

As one embodiment, the first node in the present application comprises the second communication device 450, and the second node in the present application comprises the first communication device 410.

As one sub-embodiment of the above embodiment, the first node is user equipment, and the second node is user equipment.

As one sub-embodiment of the above embodiment, the first node is user equipment, and the second node is a relay node.

As one sub-embodiment of the above embodiment, the first node is a relay node, and the second node is user equipment.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second node is user equipment, and the first node is a base station device.

As one sub-embodiment of the above embodiment, the second node is a relay node, and the first node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for error detection using an acknowledgement (ACK) and/or negative acknowledgement (NACK) protocol to support HARQ operations.

As one embodiment, the second communication device 450 comprises: at least one processor and at least one memory, the at least one memory including computer program codes; and the at least one memory and the computer program codes are configured to be used together with the at least one processor. The second communication device 450 apparatus at least: receives a first PDCCH, the first PDCCH ending at a first symbol; and sending a first PUSCH and a second PUSCH, the first PDCCH scheduling the first PUSCH, and the second PUSCH starting at a second symbol, wherein the first PUSCH and the second PUSCH overlap in a time domain; and whether an end of the first symbol can be less than N symbols earlier than a start of the second symbol is related to whether the first PDCCH and the second PUSCH are associated to different coresetPoolIndex values, and N depends on a UE processing capability.

As one sub-embodiment of the above embodiment, the second communication device 450 corresponds to the first node in the present application.

As one embodiment, the second communication device 450 comprises: a memory storing a computer-readable instruction program, the computer-readable instruction program generates actions when executed by at least one processor, and the actions comprise: receiving a first PDCCH, the first PDCCH ending at a first symbol; and sending a first PUSCH and a second PUSCH, the first PDCCH scheduling the first PUSCH, and the second PUSCH starting at a second symbol, wherein the first PUSCH and the second PUSCH overlap in a time domain; and whether the end of the first symbol can be less than N symbols earlier than the start of the second symbol is related to whether the first PDCCH and the second PUSCH are associated to different coresetPoolIndex values, and the N depends on a UE processing capability.

As one sub-embodiment of the above embodiment, the second communication device 450 corresponds to the first node in the present application.

As one embodiment, the first communication device 410 comprises: at least one processor and at least one memory, the at least one memory including computer program codes; and the at least one memory and the computer program codes are configured to be used together with the at least one processor. The first communication device 410 apparatus at least: sends a first PDCCH, the first PDCCH ending at a first symbol; and receives a first PUSCH and a second PUSCH, the first PDCCH scheduling the first PUSCH, and the second PUSCH starting at a second symbol, wherein the first PUSCH and the second PUSCH overlap in a time domain; and whether an end of the first symbol can be less than N symbols earlier than a start of the second symbol is related to whether the first PDCCH and the second PUSCH are associated to different coresetPoolIndex values, and N depends on a UE processing capability.

As one sub-embodiment of the above embodiment, the first communication device 410 corresponds to the second node in the present application.

As one embodiment, the first communication device 410 comprises: a memory storing a computer-readable instruction program, wherein the computer-readable instruction program generates actions when executed by at least one processor, and the actions comprise: sending a first PDCCH, the first PDCCH ending at a first symbol; and receiving a first PUSCH and a second PUSCH, the first PDCCH scheduling the first PUSCH, and the second PUSCH starting at a second symbol, wherein the first PUSCH and the second PUSCH overlap in a time domain; and whether the end of the first symbol can be less than N symbols earlier than the start of the second symbol is related to whether the first PDCCH and the second PUSCH are associated to different coresetPoolIndex values, and the N depends on a UE processing capability.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first PDCCH in the present application.

As one embodiment, at least one of {the antenna 420, the transmitting device 418, the multi-antenna transmitting processor 471, the transmitting processor 416, the controller/processor 475, and the memory 476} is used for transmitting the first PDCCH.

As one embodiment, at least one of {the antenna 452, the transmitting device 454, the multi-antenna transmitting processor 458, the transmitting processor 468, the controller/processor 459, the memory 460, and the data source 467} is used for sending the first PUSCH in the present application.

As one embodiment, at least one of {the antenna 420, the receiving device 418, the multi-antenna receiving processor 472, the receiving processor 470, the controller/processor 475, and the memory 476} is used for receiving the first PUSCH in the present application.

As one embodiment, at least one of {the antenna 452, the transmitting device 454, the multi-antenna transmitting processor 458, the transmitting processor 468, the controller/processor 459, the memory 460, and the data source 467} is used for sending the second PUSCH in the present application.

As one embodiment, at least one of {the antenna 420, the receiving device 418, the multi-antenna receiving processor 472, the receiving processor 470, the controller/processor 475 and the memory 476} is used for receiving the second PUSCH in the present application.

### Embodiment 5

Embodiment 5 illustrates a flowchart of signal transmission according to one embodiment of the present application, as shown in FIG. 5. In FIG. 5, a first node U1 and a second node U2 communicate through an air interface.

The first node U1 receives a first PDCCH in step S511; and sends a first PUSCH and a second PUSCH in step S512.

The second node U2 sends a first PDCCH in step S521; and receives a first PUSCH and a second PUSCH in step S522.

In Embodiment 5, the first PDCCH ends at a first symbol; the first PDCCH schedules the first PUSCH, and the second PUSCH starts at a second symbol; the first PUSCH and the second PUSCH overlap in a time domain; whether an end of the first symbol can be less than N symbols earlier than a start of the second symbol is related to whether the first PDCCH and the second PUSCH are associated to different coresetPoolIndex values, and N depends on a UE processing capability; when the first PDCCH and the second PUSCH are associated to different coresetPoolIndex values, the end of the first symbol can be less than N symbols earlier than the start of the second symbol; when the first PDCCH and the second PUSCH are not associated to different coresetPoolIndex values, the case that the end of the first symbol is less than N symbols earlier than the start of the second symbol is not expected; the second PUSCH is a PUSCH with a configured grant; The first PUSCH and the second PUSCH are on the same serving cell.

As one sub-embodiment of Embodiment 5, the N is the number of symbols occupied by PUSCH preparation time.

As one sub-embodiment of Embodiment 5, ackNackFeedbackMode is configured as separate.

As one sub-embodiment of Embodiment 5, ackNackFeedbackMode is configured as joint.

As one embodiment, the first node U1 is the first node in the present application.

As one embodiment, the second node U2 is the second node in the present application.

As one embodiment, the first node U1 is one piece of UE.

As one embodiment, the first node U1 is one base station.

As one embodiment, the second node U2 is one base station.

As one embodiment, the second node U2 is one piece of UE.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 comprises a radio interface between a base station device and user equipment.

As one embodiment, an air interface between the second node U2 and the first node U1 comprises a radio interface between a satellite device and user equipment.

As one embodiment, an air interface between the second node U2 and the first node U1 comprises a radio interface between user equipment and user equipment.

As one embodiment, the problem to be solved by the present application comprises: how to improve scheduling flexibility.

As one embodiment, the problem to be solved by the present application comprises: how to improve uplink transmission performance.

As one embodiment, the problem to be solved by the present application comprises: how to optimize system design to support different user equipment.

As one embodiment, the problem to be solved by the present application comprises: how to ensure good compatibility.

As one embodiment, the problem to be solved by the present application comprises: clarifying a relationship between a PDCCH and a PUSCH.

As one embodiment, the problem to be solved by the present application comprises: clarifying a relationship between whether the end of the first symbol can be less than N symbols earlier than the start of the second symbol and whether the first PDCCH and the second PUSCH are associated to different coresetPoolIndex values.

As one embodiment, the problem to be solved by the present application comprises: how to enhance for scenarios where a PUSCH scheduled by a PDCCH and a PUSCH with a configured grant are sent simultaneously, to improve scheduling flexibility or transmission efficiency.

### Embodiment 6

Embodiment 6 illustrates a schematic diagram illustrating that an end of a first symbol can be less than N symbols earlier than a start of a second symbol according to one embodiment of the present application, as shown in FIG. 6.

In Embodiment 6, when the first PDCCH and the second PUSCH are associated to different coresetPoolIndex values, the end of the first symbol can be less than N symbols earlier than the start of the second symbol.

As one embodiment, a coresetPoolIndex value to which the first PDCCH is associated is: a coresetPoolIndex value of ControlResourceSet for configuring a resource occupied by the first PDCCH.

As one embodiment, a coresetPoolIndex value to which the first PDCCH is associated is: a coresetPoolIndex value of a control resource set (CORESET) to which a resource occupied by the first PDCCH belongs.

As one embodiment, a coresetPoolIndex value to which the first PDCCH is associated is: a coresetPoolIndex value of ControlResourceSet for configuring the search of DCI detected in the first PDCCH.

As one embodiment, a coresetPoolIndex value to which the first PDCCH is associated is: a coresetPoolIndex value associated to DCI scheduling the first PUSCH.

As one embodiment, a coresetPoolIndex value to which the first PDCCH is associated is: a coresetPoolIndex value of a control resource set that is associated to DCI scheduling the first PUSCH.

As one embodiment, a coresetPoolIndex value to which the first PDCCH is associated is: a coresetPoolIndex value associated to DCI detected in the first PDCCH.

As one embodiment, a coresetPoolIndex value to which the first PDCCH is associated is: a coresetPoolIndex value of a control resource set to which DCI detected in the first PDCCH is associated.

As one embodiment, a coresetPoolIndex value to which the first PDCCH is associated is: a coresetPoolIndex value of a control resource set to which the first PDCCH is associated.

As one embodiment, a coresetPoolIndex value to which the first PDCCH is associated is: a coresetPoollndex value to which the first PUSCH is associated.

As one embodiment, a coresetPoolIndex value to which the first PDCCH is associated is: a coresetPoolIndex value associated to an SRS (Sounding reference signal) resource set (SRS resource set) for the sending of the first PUSCH.

As one embodiment, a coresetPoollndex value to which the first PDCCH is associated is configurable.

As one embodiment, a coresetPoolIndex value to which the second PUSCH is associated is: a coresetPoollndex value associated to an SRS resource set for the sending of the second PUSCH.

As one embodiment, a coresetPoolIndex value to which the second PUSCH is associated is: a coresetPoolIndex value of a control resource set to which DCI for activating the second PUSCH is associated.

As one embodiment, a coresetPoolIndex value to which the second PUSCH is associated is: a coresetPoolIndex value of ControlResourceSet for configuring the search of DCI for activating the second PUSCH.

As one embodiment, a coresetPoolIndex value to which the second PUSCH is associated is configurable.

As one embodiment, the meaning of "the first PDCCH and the second PUSCH are associated to different coresetPoolIndex values" is: a coresetPoolIndex value to which the first PDCCH is associated is different from a coresetPoolIndex value to which the second PUSCH is associated.

As one embodiment, the coresetPoolIndex is a parameter indicating an index of a CORESET (Control resource set) pool.

As one embodiment, the coresetPoolIndex is an RRC layer parameter.

As one embodiment, one coresetPoolIndex value is an index of a CORESET pool.

As one embodiment, one coresetPoolIndex value is one of 0 or 1.

As one embodiment, the meaning of the expression "the end of the first symbol can be less than N symbols earlier than the start of the second symbol" is: it is allowed that the end of the first symbol is less than N symbols earlier than the start of the second symbol.

As one embodiment, the meaning of the expression "the end of the first symbol can be less than N symbols earlier than the start of the second symbol" is: it is not expected that the end of the first symbol is less than N symbols earlier than the start of the second symbol.

As one embodiment, the meaning of the expression "the end of the first symbol can be less than N symbols earlier than the start of the second symbol" is: the case that the end of the first symbol is less than N symbols earlier than the start of the second symbol is in an expectation of the first node.

As one embodiment, the meaning of the expression "the end of the first symbol can be less than N symbols earlier than the start of the second symbol" is: any one of the two cases that the end of the first symbol is at least N symbols earlier than the start of the second symbol, or that the end of the first symbol is less than N symbols earlier than the start of the second symbol is in an expectation of the first node.

As one embodiment, when the end of the first symbol is before the start of the second symbol and an interval between the end of the first symbol and the start of the second symbol is smaller than a length of time occupied by N symbols, the end of the first symbol is less than N symbols earlier than the start of the second symbol.

As one embodiment, when the end of the first symbol is not later than the start of the second symbol and an interval between the end of the first symbol and the start of the second symbol is smaller than the length of time occupied by N symbols, the end of the first symbol is less than N symbols earlier than the start of the second symbol.

As one embodiment, when the end of the first symbol is not before the start of the second symbol, the end of the first symbol is less than N symbols earlier than the start of the second symbol.

As one embodiment, the meaning of "the end of the first symbol is less than N symbols earlier than the start of the second symbol" is: the end of the first symbol is not at least N symbols earlier than the start of the second symbol.

### Embodiment 7

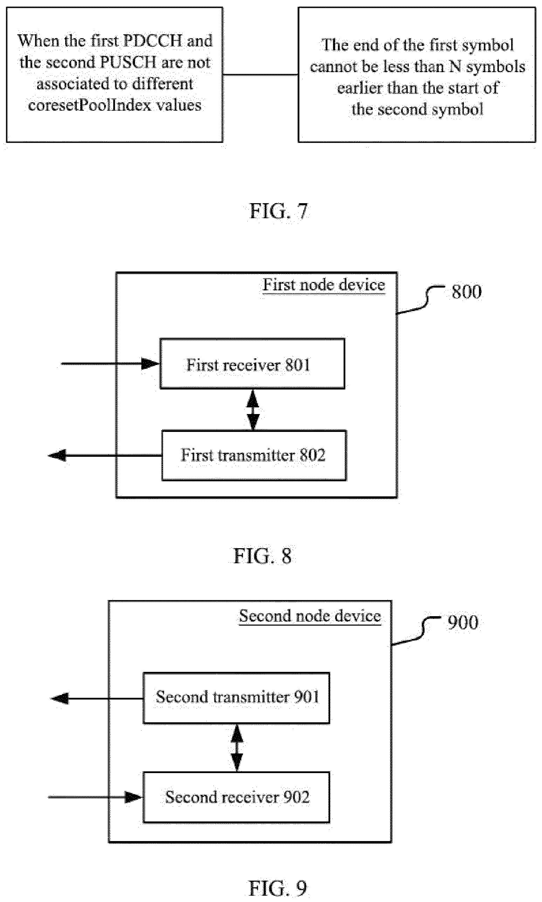

Embodiment 7 illustrates a schematic diagram illustrating that an end of a first symbol cannot be less than N symbols earlier than a start of a second symbol according to one embodiment of the present application, as shown in FIG. 7.

In Embodiment 7, when the first PDCCH and the second PUSCH are not associated to different coresetPoolIndex values, the end of the first symbol cannot be less than N symbols earlier than the start of the second symbol.

As one embodiment, when the coresetPoolIndex value to which the first PDCCH is associated is the same as the coresetPoolIndex value to which the second PUSCH is associated, the first PDCCH and the second PUSCH are not associated to different coresetPoolIndex values.

As one embodiment, when the first node is not configured with different coresetPoolIndex values, the first PDCCH and the second PUSCH are not associated to different coresetPoolIndex values.

As one embodiment, the meaning of "the first PDCCH and the second PUSCH are not associated to different coresetPoolIndex values" is: the first PUSCH and the second PUSCH are not associated to different coresetPoollndex values.

As one embodiment, the meaning of "the first PDCCH and the second PUSCH are not associated to different coresetPoolIndex values" is: the first PDCCH and the DCI used for activating the second PUSCH are not associated to a control resource set with different coresetPoollndex values.

As one embodiment, the meaning of the expression "the end of the first symbol cannot be less than N symbols earlier than the start of the second symbol" is: it is not allowed that the end of the first symbol is less than N symbols earlier than the start of the second symbol.

As one embodiment, the meaning of the expression "the end of the first symbol cannot be less than N symbols earlier than the start of the second symbol" is: it is not expected that the end of the first symbol is less than N symbols earlier than the start of the second symbol.

As one embodiment, the meaning of the expression "the end of the first symbol cannot be less than N symbols earlier than the start of the second symbol" is: the case that the end of the first symbol is less than N symbols earlier than the start of the second symbol is not in an expectation of the first node.

As one embodiment, the meaning of "the end of the first symbol is less than N symbols earlier than the start of the second symbol" is: the end of the first symbol is not at least N symbols earlier than the start of the second symbol.

As one embodiment, the meaning of the expression "the end of the first symbol cannot be less than N symbols earlier than the start of the second symbol" is: the end of the first symbol is at least N symbols earlier than the start of the second symbol.

As one embodiment, when the end of the first symbol is not later than the start of the second symbol and an interval between the end of the first symbol and the start of the second symbol is not smaller than the length of time occupied by N symbols, the end of the first symbol is at least N symbols earlier than the start of the second symbol.

As one embodiment, when the end of the first symbol is not later than the start of the second symbol and an interval between the end of the first symbol and the start of the second symbol is greater than the length of time occupied by N symbols, the end of the first symbol is at least N symbols earlier than the start of the second symbol.

### Embodiment 8

Embodiment 8 illustrates a structural block diagram of a processing apparatus in a first node device, as shown in FIG. 8. In FIG. 8, a processing apparatus 800 of the first node device comprises a first receiver 801 and a first transmitter 802.

As one embodiment, the first node device 800 is a base station.

As one embodiment, the first node device 800 is user equipment.

As one embodiment, the first node device 800 is a relay node.

As one embodiment, the first node device 800 is a vehicle-mounted communication device.

As one embodiment, the first node device 800 is user equipment with a single panel.

As one embodiment, the first node device 800 is user equipment with multiple panels.

As one embodiment, the first receiver 801 comprises at least one of the antenna 452, the receiving device 454, the multi-antenna receiving processor 458, the receiving processor 456, the controller/processor 459, the memory 460 and the data source 467 in FIG. 4 of the present application.

As one embodiment, the first receiver 801 comprises at least the first five of the antenna 452, the receiving device 454, the multi-antenna receiving processor 458, the receiving processor 456, the controller/processor 459, the memory 460 and the data source 467 in FIG. 4 of the present application.

As one embodiment, the first receiver 801 comprises at least the first four of the antenna 452, the receiving device 454, the multi-antenna receiving processor 458, the receiving processor 456, the controller/processor 459, the memory 460 and the data source 467 in FIG. 4 of the present application.

As one embodiment, the first receiver 801 comprises at least the first three of the antenna 452, the receiving device 454, the multi-antenna receiving processor 458, the receiving processor 456, the controller/processor 459, the memory 460 and the data source 467 in FIG. 4 of the present application.

As one embodiment, the first receiver 801 comprises at least the first two of the antenna 452, the receiving device 454, the multi-antenna receiving processor 458, the receiving processor 456, the controller/processor 459, the memory 460 and the data source 467 in FIG. 4 of the present application.

As one embodiment, the first transmitter 802 comprises at least one of the antenna 452, the transmitting device 454, the multi-antenna transmitting processor 457, the transmitting processor 468, the controller/processor 459, the memory 460 and the data source 467 in FIG. 4 of the present application.

As one embodiment, the first transmitter 802 comprises at least the first five of the antenna 452, the transmitting device 454, the multi-antenna transmitting processor 457, the transmitting processor 468, the controller/processor 459, the memory 460 and the data source 467 in FIG. 4 of the present application.

As one embodiment, the first transmitter 802 comprises at least the first four of the antenna 452, the transmitting device 454, the multi-antenna transmitting processor 457, the transmitting processor 468, the controller/processor 459, the memory 460 and the data source 467 in FIG. 4 of the present application.

As one embodiment, the first transmitter 802 comprises at least the first three of the antenna 452, the transmitting device 454, the multi-antenna transmitting processor 457, the transmitting processor 468, the controller/processor 459, the memory 460 and the data source 467 in FIG. 4 of the present application.

As one embodiment, the first transmitter 802 comprises at least the first two of the antenna 452, the transmitting device 454, the multi-antenna transmitting processor 457, the transmitting processor 468, the controller/processor 459, the memory 460 and the data source 467 in FIG. 4 of the present application.

As one embodiment, the first receiver 801 receives a first PDCCH, and the first PDCCH ends at a first symbol; the first transmitter 802 sends a first PUSCH and a second PUSCH, the first PDCCH scheduling the first PUSCH, and the second PUSCH starting at a second symbol, wherein the first PUSCH and the second PUSCH overlap in a time domain; and whether the end of the first symbol can be less than N symbols earlier than the start of the second symbol is related to whether the first PDCCH and the second PUSCH are associated to different coresetPoolIndex values, and the N depends on a UE processing capability.

As one embodiment, when the first PDCCH and the second PUSCH are associated to different coresetPoolIndex values, the end of the first symbol can be less than N symbols earlier than the start of the second symbol.

As one embodiment, when the first PDCCH and the second PUSCH are not associated to different coresetPoolIndex values, the end of the first symbol cannot be less than N symbols earlier than the start of the second symbol.

As one embodiment, the second PUSCH is a PUSCH with a configured grant.

As one embodiment, the first PUSCH and the second PUSCH are on the same serving cell.

As one embodiment, the N is the number of symbols occupied by PUSCH preparation time.

As one embodiment, the coresetPoolIndex value to which the first PDCCH is associated is a coresetPoolIndex value to which the first PUSCH is associated.

As one embodiment, ackNackFeedbackMode is configured as separate.

### Embodiment 9

Embodiment 9 illustrates a structural block diagram of a processing apparatus in a second node device, as shown in FIG. 9. In FIG. 9, a processing apparatus 900 of the second node device comprises a second transmitter 901 and a second receiver 902.

As one embodiment, the second node device 900 is user equipment.

As one embodiment, the second node device 900 is a base station.

As one embodiment, the second node device 900 is a satellite device.

As one embodiment, the second node device 900 is a relay node.

As one embodiment, the second node device 900 is a vehicle-mounted communication device.

As one embodiment, the second node device 900 is user equipment supporting V2X communication.

As one embodiment, the second node device 900 is user equipment supporting operations on a high-frequency spectrum.

As one embodiment, the second node device 900 is user equipment supporting operations on a shared spectrum.

As one embodiment, the second node device 900 is user equipment supporting XR services.

As one embodiment, the second node device 900 is one of a test apparatus, a test device and a test instrument.

As one embodiment, the second transmitter 901 comprises at least one of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first five of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first four of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first three of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first two of the antenna 420, the transmitting device 418, the multi-antenna transmitting processor 471, the transmitting processor 416, the controller/processor 475, and the memory 476 in FIG. 4 of the present application.

As one embodiment, the second receiver 902 comprises at least one of the antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first five of the antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first four of the antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first three of the antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first two of the antenna 420, the receiving device 418, the multi-antenna receiving processor 472, the receiving processor 470, the controller/processor 475, and the memory 476 in FIG. 4 of the present application.

As one embodiment, the second transmitter 901 sends a first PDCCH, the first PDCCH ending at a first symbol; the second receiver 902 receives a first PUSCH and a second PUSCH, the first PDCCH scheduling the first PUSCH, and the second PUSCH starting at a second symbol, wherein the first PUSCH and the second PUSCH overlap in a time domain; and whether the end of the first symbol can be less than N symbols earlier than the start of the second symbol is related to whether the first PDCCH and the second PUSCH are associated to different coresetPoolIndex values, and the N depends on a UE processing capability.

As one embodiment, when the first PDCCH and the second PUSCH are associated to different coresetPoolIndex values, the end of the first symbol can be less than N symbols earlier than the start of the second symbol.

As one embodiment, when the first PDCCH and the second PUSCH are not associated to different coresetPoolIndex values, the end of the first symbol cannot be less than N symbols earlier than the start of the second symbol.

As one embodiment, the second PUSCH is a PUSCH with a configured grant.

As one embodiment, the first PUSCH and the second PUSCH are on the same serving cell.

As one embodiment, the N is the number of symbols occupied by PUSCH preparation time.

As one embodiment, the coresetPoollndex value to which the first PDCCH is associated is a coresetPoollndex value to which the first PUSCH is associated.

As one embodiment, ackNackFeedbackMode is configured as separate.

Those skilled in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Correspondingly, each module unit in the above embodiment can be implemented in the form of hardware or in the form of a software function module. The present application is not limited to any specific form of combination of software and hardware. The first node device in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts, and other wireless communication devices. The second node device in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts, and other wireless communication devices. User equipment or UE or a terminal in the present application includes but is not limited to mobile phones, tablet computers, notebook computers, network access cards, low-power-consumption devices, eMTC devices, NB-IoT devices, vehicle-mounted communication devices, aircrafts, airplanes, unmanned aerial vehicles, remote-controlled aircrafts, and other wireless communication devices. A base station device or a base station or a network-side device in the present application includes but is not limited to MacroCellular base stations, micro cell base stations, home base stations, relay base stations, eNBs, gNBs, transmit/receive points TRPs, GNSSs, relay satellites, satellite base stations, air base stations, test apparatuses, test devices, test instruments, etc.

Those skilled in the art should understand that the present invention can be implemented in other specified forms without departing from its core or basic features. Therefore, the embodiments disclosed at present should be regarded as descriptive rather than restrictive in any way. The scope of the invention is determined by the attached claims rather than the previous description, and all changes within the equivalent meaning and area are considered to be included therein.

## Claims

1. A first node used for wireless communication, comprising:
a first receiver receiving a first PDCCH, the first PDCCH ending at a first symbol;
and a first transmitter sending a first PUSCH and a second PUSCH, the first PDCCH scheduling the first PUSCH, and the second PUSCH starting at a second symbol, wherein the second PUSCH is a PUSCH with a configured grant; the first PUSCH and the second PUSCH are on the same serving cell; the first PUSCH and the second PUSCH overlap in a time domain,
wherein whether an end of the first symbol can be less than N symbols earlier than a start of the second symbol is related to whether the first PDCCH and the second PUSCH are associated to different coresetPoolIndex values, and N depends on a UE processing capability; and a coresetPoollndex value to which the first PDCCH is associated is a coresetPoollndex value to which the first PUSCH is associated.

2. The first node according to claim 1, wherein when the first PDCCH and the second PUSCH are associated to different coresetPoolIndex values, the end of the first symbol can be less than N symbols earlier than the start of the second symbol.

3. The first node according to claim 1 or 2, wherein when the first PDCCH and the second PUSCH are not associated to different coresetPoolIndex values, the end of the first symbol cannot be less than N symbols earlier than the start of the second symbol.

4. The first node according to claim 1 or 2, wherein when the coresetPoolIndex value to which the first PDCCH is associated is the same as the coresetPoolIndex value to which the second PUSCH is associated, the first PDCCH and the second PUSCH are not associated to different coresetPoolIndex values; and when the first PDCCH and the second PUSCH are not associated to different coresetPoolIndex values, the end of the first symbol cannot be less than N symbols earlier than the start of the second symbol.

5. The first node according to any one of claims 1 to 4, wherein the expressions "whether the first PDCCH and the second PUSCH are associated to different coresetPoolIndex values" and "whether the first PUSCH and the second PUSCH are associated to different coresetPoolIndex values" are equivalent or interchangeable.

6. The first node according to any one of claims 1 to 5, wherein the N is the number of symbols occupied by PUSCH preparation time, and the N is determined based on a UE processing capability.

7. The first node according to any one of claims 1 to 6, wherein the N is based on the smaller one of a subcarrier interval corresponding to the second PUSCH and a subcarrier interval corresponding to the first PDCCH.

8. The first node according to any one of claims 1 to 7, wherein the first node is configured with a higher layer parameter PDCCH-Config of an active BWP (Bandwidth part) for one serving cell, and the higher layer parameter PDCCH-Config comprises 2 different coresetPoolIndex values in ControlResourceSet.

9. The first node according to any one of claims 1 to 8, wherein the coresetPoolIndex value to which the first PDCCH is associated is configurable, and the coresetPoolIndex value to which the second PUSCH is associated is configurable.

10. The first node according to any one of claims 1 to 9, wherein ackNackFeedbackMode is configured as separate.

11. A second node used for wireless communication, comprising:
a second transmitter sending a first PDCCH, the first PDCCH ending at a first symbol;
and a second receiver receiving a first PUSCH and a second PUSCH, the first PDCCH scheduling the first PUSCH, and the second PUSCH starting at a second symbol, wherein the second PUSCH is a PUSCH with a configured grant; the first PUSCH and the second PUSCH are on the same serving cell; the first PUSCH and the second PUSCH overlap in a time domain,
wherein whether an end of the first symbol can be less than N symbols earlier than a start of the second symbol is related to whether the first PDCCH and the second PUSCH are associated to different coresetPoollndex values, and N depends on a UE processing capability; and a coresetPoolIndex value to which the first PDCCH is associated is a coresetPoolIndex value to which the first PUSCH is associated.

12. The second node according to claim 11, wherein when the first PDCCH and the second PUSCH are associated to different coresetPoolIndex values, the end of the first symbol can be less than N symbols earlier than the start of the second symbol.

13. The second node according to claim 11 or 12, wherein when the first PDCCH and the second PUSCH are not associated to different coresetPoolIndex values, the end of the first symbol cannot be less than N symbols earlier than the start of the second symbol.

14. The second node according to claim 11 or 12, wherein when the coresetPoolIndex value to which the first PDCCH is associated is the same as the coresetPoolIndex value to which the second PUSCH is associated, the first PDCCH and the second PUSCH are not associated to different coresetPoolIndex values; and when the first PDCCH and the second PUSCH are not associated to different coresetPoolIndex values, the end of the first symbol cannot be less than N symbols earlier than the start of the second symbol.

15. The second node according to any one of claims 11 to 14, wherein the expressions "whether the first PDCCH and the second PUSCH are associated to different coresetPoolIndex values" and "whether the first PUSCH and the second PUSCH are associated to different coresetPoolIndex values" are equivalent or interchangeable.

16. The second node according to any one of claims 11 to 15, wherein N is determined based on a UE processing capability.

17. The second node according to any one of claims 11 to 16, wherein the N is based on the smaller one of a subcarrier interval corresponding to the second PUSCH and a subcarrier interval corresponding to the first PDCCH.

18. The second node according to any one of claims 11 to 17, wherein the N is the number of symbols occupied by PUSCH preparation time.

19. The second node according to any one of claims 11 to 18, wherein the coresetPoolIndex value to which the first PDCCH is associated is configurable, and the coresetPoolIndex value to which the second PUSCH is associated is configurable.

20. The second node according to any one of claims 11 to 19, wherein ackNackFeedbackMode is configured as separate.

21. A method used in a first node for wireless communication, comprising:
receiving a first PDCCH, the first PDCCH ending at a first symbol;
and sending a first PUSCH and a second PUSCH, the first PDCCH scheduling the first PUSCH, and the second PUSCH starting at a second symbol, wherein the second PUSCH is a PUSCH with a configured grant; the first PUSCH and the second PUSCH are on the same serving cell; the first PUSCH and the second PUSCH overlap in a time domain,
wherein whether an end of the first symbol can be less than N symbols earlier than a start of the second symbol is related to whether the first PDCCH and the second PUSCH are associated to different coresetPoolIndex values, and N depends on a UE processing capability; and a coresetPoolIndex value to which the first PDCCH is associated is a coresetPoolIndex value to which the first PUSCH is associated.

22. The method in the first node according to claim 21, wherein when the first PDCCH and the second PUSCH are associated to different coresetPoolIndex values, the end of the first symbol can be less than N symbols earlier than the start of the second symbol.

23. The method in the first node according to claim 21 or 22, wherein when the first PDCCH and the second PUSCH are not associated to different coresetPoolIndex values, the end of the first symbol cannot be less than N symbols earlier than the start of the second symbol.

24. The method in the first node according to claim 21 or 22, wherein when the coresetPoolIndex value to which the first PDCCH is associated is the same as the coresetPoolIndex value to which the second PUSCH is associated, the first PDCCH and the second PUSCH are not associated to different coresetPoolIndex values; and when the first PDCCH and the second PUSCH are not associated to different coresetPoolIndex values, the end of the first symbol cannot be less than N symbols earlier than the start of the second symbol.

25. The method in the first node according to any one of claims 21 to 24, wherein the expressions "whether the first PDCCH and the second PUSCH are associated to different coresetPoolIndex values" and "whether the first PUSCH and the second PUSCH are associated to different coresetPoolIndex values" are equivalent or interchangeable.

26. The method in the first node according to any one of claims 21 to 25, wherein N is the number of symbols occupied by PUSCH preparation time, and the N is determined based on a UE processing capability.

27. The method in the first node according to any one of claims 21 to 26, wherein the N is based on the smaller one of a subcarrier interval corresponding to the second PUSCH and a subcarrier interval corresponding to the first PDCCH.

28. The method in the first node according to any one of claims 21 to 27, wherein the first node is configured with a higher layer parameter PDCCH-Config of an active BWP (Bandwidth part) for one serving cell, and the higher layer parameter PDCCH-Config comprises 2 different coresetPoollndex values in ControlResourceSet.

29. The method in the first node according to any one of claims 21 to 28, wherein the coresetPoolIndex value to which the first PDCCH is associated is configurable, and the coresetPoollndex value to which the second PUSCH is associated is configurable.

30. The method in the first node according to any one of claims 21 to 29, wherein ackNackFeedbackMode is configured as separate.

31. A method used in a second node for wireless communication, comprising:
sending a first PDCCH, the first PDCCH ending at a first symbol;
and receiving a first PUSCH and a second PUSCH, the first PDCCH scheduling the first PUSCH, and the second PUSCH starting at a second symbol, wherein the second PUSCH is a PUSCH with a configured grant; the first PUSCH and the second PUSCH are on the same serving cell; the first PUSCH and the second PUSCH overlap in a time domain,
wherein whether an end of the first symbol can be less than N symbols earlier than a start of the second symbol is related to whether the first PDCCH and the second PUSCH are associated to different coresetPoolIndex values, and N depends on a UE processing capability; and a coresetPoolIndex value to which the first PDCCH is associated is a coresetPoolIndex value to which the first PUSCH is associated.

32. The method in the second node according to claim 31, wherein when the first PDCCH and the second PUSCH are associated to different coresetPoolIndex values, the end of the first symbol can be less than N symbols earlier than the start of the second symbol.

33. The method in the second node according to claim 31 or 32, wherein when the first PDCCH and the second PUSCH are not associated to different coresetPoolIndex values, the end of the first symbol cannot be less than N symbols earlier than the start of the second symbol.

34. The method in the second node according to claim 31 or 32, wherein when the coresetPoolIndex value to which the first PDCCH is associated is the same as the coresetPoolIndex value to which the second PUSCH is associated, the first PDCCH and the second PUSCH are not associated to different coresetPoolIndex values; and when the first PDCCH and the second PUSCH are not associated to different coresetPoolIndex values, the end of the first symbol cannot be less than N symbols earlier than the start of the second symbol.

35. The method in the second node according to any one of claims 31 to 34, wherein the expressions "whether the first PDCCH and the second PUSCH are associated to different coresetPoollndex values" and "whether the first PUSCH and the second PUSCH are associated to different coresetPoolIndex values" are equivalent or interchangeable.

36. The method in the second node according to any one of claims 31 to 35, wherein N is determined based on a UE processing capability.

37. The method in the second node according to any one of claims 31 to 36, wherein the N is based on the smaller one of a subcarrier interval corresponding to the second PUSCH and a subcarrier interval corresponding to the first PDCCH.

38. The method in the second node according to any one of claims 31 to 37, wherein the N is the number of symbols occupied by PUSCH preparation time.

39. The method in the second node according to any one of claims 31 to 38, wherein the coresetPoolIndex value to which the first PDCCH is associated is configurable, and the coresetPoolIndex value to which the second PUSCH is associated is configurable.

40. The method in the second node according to any one of claims 31 to 39, wherein ackNackFeedbackMode is configured as separate.
